# EUROPÄISCHE PATENTANMELDUNG

(11) **EP 1 495 800 A2**
(43) Veröffentlichungstag der Anmeldung: **12.01.2005**
(21) Anmeldenummer: 04012876.1
(22) Anmeldetag: 01.06.2004
(51) Int. Cl.: B01J 20/06, B01J 39/10, B01J 39/20, B01J 41/10, B01J 41/14, C02F 1/28

(54) **Verfahren zur Herstellung von Eisenoxid-und/oder Eisenoxihydroxyd-haltigen Ionenaustauschern**

(30) Priorität: 13.06.2003 DE 10327112
(71) Anmelder: Bayer Chemicals AG, 51368 Leverkusen (DE)
(72) Erfinder: Podszun, Wolfgang, Dr., 51061 Köln (DE); Schlegel, Andreas, Dr., 47800 Krefeld (DE); Klipper, Reinhold, Dr., 50933 Köln (DE); Seidel, Rüdiger, Dr., 06792 Sandersdorf (DE); Hermann, Udo, Dr., 41541 Dormagen (DE)

(57) **Zusammenfassung**

Die vorliegende Erfindung betrifft ein Verfahren zur Herstellung von Eisenoxid- und/oder Eisenoxihydroxyd-haltigen Ionenaustauschern durch Polymerisation von Eisenoxid- und/oder Eisenoxihydroxyd-haltigen Gemischen und Funktionalisierung der erhaltenen Polymerisate.

## Beschreibung

Die vorliegende Erfindung betrifft ein Verfahren zur Herstellung von Eisenoxid- und/oder Eisenoxihydroxyd-haltigen Ionenaustauschern durch Polymerisation von Eisenoxid- und/oder Eisenoxihydroxyd-haltigen Gemischen und Funktionalisierung der erhaltenen Polymerisate.

Ionenaustauscher werden in vielfältiger Weise zur Reinigung von Rohwässern, Abwässern und wässrigen Prozessströmen eingesetzt. Sie sind besonders wirksam bei der Enthärtung und Entsalzung. Allerdings besitzen Ionenaustauscher nicht immer die gewünschte Selektivität. So ist es beispielsweise nicht möglich mit Hilfe von Ionenaustauschern Arsenat-Ionen in Gegenwart erhöhter Mengen anderer Anionen, wie zum Beispiel Chlorid oder Sulfat zu entfernen.

Eisenoxid und/oder Eisenoxidhydroxyd sind zum Entfernen von Arsenat-Ionen gut geeignet. So beschreibt die DE-A 4 320 003 ein Verfahren zum Entfernen von gelöstem Arsen aus Grundwasser mittels kolloidem oder granuliertem Eisenhydroxid. Aus der DE-A 10129306 ist ein fest in Fe(OH)₃-Polymer eingebettetes Eisenoxid und/oder Eisenoxihydroxid beschrieben, welches zur Entfernung von Schadstoffen aus Abwässern oder Abgasen geeignet ist. Nachteilig bei der Verwendung von kolloiden oder granulierten Eisenoxid als Adsorber für Schadstoffe ist der relativ hohe Druckverlust in der Anwendung und die geringe mechanische Festigkeit der Granulate.

Die Herstellung von Perlpolymerisaten mit eingeschlossenem superparamagnetischen Eisenoxid für Anwendungen in der Diagnostik ist Gegenstand der WO 02/04555 A1. Diese Perlpolymerisate haben nur eine geringe Tendenz Schadstoffe, wie z.B. Arsen zu adsorbieren.

Aus Sengupta et al., Ion Exchange at the Millenium, 142-149, 2000 sind sphärische macroporöse Kationenaustauscher, z.B. Purolite C-145 mit submicronen hydratisierten Eisenoxid (HFO) Partikeln für die Adsorption von Arsen-III- und Arsen-V-Oxyanionen bekannt.

Die Aufgabe der vorliegenden Erfindung ist die Bereitstellung eines Verfahrens zur Herstellung neuer Eisenoxid- und/oder Eisenoxihydroxyd-haltigen Ionenaustauscher für die Entfernung von Schadstoffen, einschließlich Arsen, aus Flüssigkeiten oder Gasen.

Es wurde nun ein Verfahren zur Herstellung eines Eisenoxid- und/oder Eisenoxihydroxyd-haltigen Ionenaustauschers gefunden, welches dadurch gekennzeichnet ist, dass man
I) ein Gemisch aus
   a) Vinylmonomer
   b) Vernetzer
   c) feinteiligem Eisenoxid und/oder Eisenoxihydroxid
   d) Dispergierhilfsmittel und
   e) Radikalstarter und gegebenenfalls
   f) Inertmittel erzeugt,
II) das erhaltene Gemisch in wässriger Phase bei erhöhter Temperatur zu einem Perlpolymerisat aushärtet und
III) das erhaltene Perlpolymerisat durch Funktionalisieren in einen Ionenaustauscher überführt.

Vinylmonomere (a) im Sinne der Erfindung sind Verbindungen mit einer radikalisch polymerisierbaren C=C-Doppelbindung pro Molekül. Bevorzugte Verbindungen dieser Art umfassen aromatische Monomere wie beispielsweise Vinyl- und Vinylidenderivate des Benzols und des Naphthalins, wie z.B. Vinylnaphthalin, Vinyltoluol, Ethylstyrol, α-Methylstyrol, Chlorstyrole, Styrol, sowie nicht-aromatische Vinyl- und Vinylidenverbindungen, wie z.B. Acrylsäure, Methacrylsäure, Acrylsäure-C₁-C₈-alkylester, Methacrylsäure-C₁-C₈-alkylester, Acrylnitril, Methacrylnitril, Acrylamid, Methacrylamid, Vinylchlorid, Vinylidenchlorid und Vinylacetat. Bevorzugt werden Styrol, Acrylsäure-C₁-C₂-alkylester, Methacrylsäure-C₁-C₂-alkylester und Acrylnitril. Natürlich können Mischungen unterschiedlicher Monomere eingesetzt werden.

Erfindungsgemäß zu verwendende Vernetzer (b) sind Verbindungen, die zwei oder mehr, vorzugsweise zwei bis vier radikalisch polymerisierbare Doppelbindungen pro Molekül enthalten. Beispielhaft seien genannt: Divinylbenzol, Divinyltoluol, Trivinylbenzol, Divinylnaphthalin, Trivinylnaphthalin, Diethylenglycoldivinylether, Octadien-1,7, Hexadien-1,5, Diethylenglycoldivinylether und Butandioldivinylether. Der Anteil an Vernetzer beträgt im Allgemeinen 1 bis 50 Gew.-%, bevorzugt 2 bis 16 Gew.-% bezogen auf die Summe der Komponenten (a) und (b).

Unter feinteiligem Eisenoxid und/oder Eisenoxihydroxid (c) werden feste partikelförmige Oxide und/oder Oxihydroxide des Eisens verstanden. Bevorzugt werden Oxide und Oxihydroxide von dreiwertigem Eisen, wobei ein gewisser Anteil an zweiwertigem Eisen nicht stört. Nicht magnetische Oxide und Oxihydroxide des Eisens werden bevorzugt. Besonders gut geeignet ist α-FeOOH. Die Primärteilchengröße des Eisenoxid und/oder Eisenoxidhydroxid beträgt 0,01 bis 1,0 µm. Bei nadelförmigen Partikeln ist mit Primärteilchengröße die Länge gemeint. Es ist möglich und wegen der leichteren Handhabbarkeit im allgemeinen vorteilhaft Eisenoxid und/oder Eisenoxidhydroxid zu verwenden, welches nicht in Form der isolierten Primärpartikel sondern in Form von Agglomeraten oder Granulaten vorliegt. Die Agglomerate bzw. Granulate können Teilchengrößen von 0,2 bis 50 µm, vorzugsweise 0,3 bis 10 µm, besonders bevorzugt 0,4 bis 5µm haben. Falls das Ausgangsmaterial in gröberer Form vorliegt, kann es mit Hilfe von Mühlen, z.B. Kugelmühlen auf die gewünschte Größe zerkleinert werden. Das Eisenoxid und/oder Eisenoxidhydroxid wird in einer Menge von 1 bis 60 Gew.-%, vorzugsweise 2,5 bis 40 Gew.-% bezogen auf die Summe der Komponenten (a), (b) und (c) eingesetzt.

Erfindungsgemäß als Dispergierhilfsmittel (d) kommen niedermolekulare und hochmolekulare Verbindungen, die in den Komponenten (a) und (b) löslich sind, in Frage. Als hochmolekulare Verbindungen seien genannt: Polymethylmethacrylat, Copolymerisate aus (Meth)acrylsäureestem und (Meth)acrylsäure, Styrol-Maleinsäureanhydrid-Copolymerisate, Polyvinylacetat, acetalisierte Polyvinylalkohole, Copolymerisate aus Vinylacetat und N-Vinylpyrolidon, sowie Blockcopolymere aus z.B. Acrylnitril und Butadien.

Niedermolekulare Dispergierhilfsmittel (d) sind beispielsweise C₈-C₂₄-Carbonsäuren und deren Amide. Beispielhaft seien genannt Undecansäure, Stearinsäure, Ölsäure, Cetylamid. Weiterhin geeignet sind Sulfonsäuren und Phosphonsäuren mit 6 bis 18 C-Atomen, sowie deren Alkalisalze. Das Dispergierhilfsmittel wird in einer Menge von 0,05 bis 25 Gew.-%, vorzugsweise 0,1 bis 2,5 Gew.-% bezogen auf die Summe der Komponenten (a) und (b) eingesetzt.

Für das erfindungsgemäße Verfahren geeignete Radikalstarter e) sind Azoverbindungen, wie z.B. 2,2'-Azobis(isobutyronitril) und 2,2'-Azobis(2-methylisobutyronitril) und Peroxyverbindungen, wie Dibenzoylperoxid, Dilaurylperoxid, Bis(p-chlorbenzoylperoxid), Dicyclohexylperoxydicarbonat, tert.-Butylperoxy-2-ethylhexanoat, 2,5-Bis(2-ethylhexanoylperoxy)-2,5-dimethylhexan, tert.-Butylperoxybenzoat und tert.-Amylperoxy-2-etylhexan. Es ist natürlich möglich und in vielen Fällen vorteilhaft, Mischungen von verschiedenen Radikalstartern, beispielsweise von Radikalstartern mit unterschiedlicher Zerfallstemperatur einzusetzen. Die Radikalstarter werden im allgemeinen in Mengen von 0.05 bis 1 %, vorzugsweise 0,1 bis 0,8 % bezogen auf die Summe der Komponenten (a) und (b) eingesetzt.

Als gegebenenfalls einzusetzende Inertmittel kommen nicht-reaktive Flüssigkeiten, die sich mit den Komponenten (a) und (b) mischen in Frage. Beispielhaft seien genannt Toluol, Xylol, Isoamylacetat. Sofern man einen makroporösen Eisenoxid- und/oder Eisenoxihydroxyd-haltigen Ionenaustauscher erzeugen will, können Inertmittel mit porogener Wirkung verwendet werden. Beispielhaft seien genannt Isooctan, Isododecan, Octanol, Butyldiglycol und Butandiol. Das Inertmittel wird in einer Menge von 0 bis 150 Gew.-%, vorzugsweise 0 bis 80 Gew.-% bezogen auf die Summe der Komponenten (a) und (b) eingesetzt.

Das Gemisch aus den Komponenten (a) bis (f) kann nach herkömmlichen Methoden in üblichen Misch- bzw. Rührgeräten erzeugt werden.

In einer besonderen Ausführungsform der vorliegenden Erfindung wird zunächst mit Hilfe einer Mühle, vorzugsweise mit einer Kugelmühle eine Suspension des feinteiligen Eisenoxids und/oder Eisenoxihydroxids (c) in einer Flüssigkeit ausgewählt aus den Komponenten (a), (b) und/oder (f) unter Verwendung des Dispergierhilfsmittels (d) erzeugt und danach die übrigen Komponenten zugesetzt. Um eine vorzeitige Polymerisation zu verhindern, wird der Radikalstarter (e) zweckmäßiger Weise erst unmittelbar vor der Ausführung des Verfahrensschrittes (II) hinzugefügt.

Die Aushärtung des Gemisches in wässriger Phase erfolgt in Anwesenheit eines oder mehrerer Schutzkolloide und gegebenenfalls eines Puffersystems. Als Schutzkolloide sind natürliche und synthetische wasserlösliche Polymere, wie z.B. Gelatine, Stärke, Polyvinylalkohol, Polyvinylpyrrolidon, Polyacrylsäure, Polymethacrylsäure und Copolymerisate aus (Meth)acrylsäure und (Meth)acrylsäureestern geeignet. Sehr gut geeignet sind auch Cellulosederivate, insbesondere Celluloseester und Celluloseether, wie Carboxymethylcellulose, Hydroxyethylcellulose und Hydroxyethylmethycellulose. Cellulosederivate sind als Schutzkolloid bevorzugt. Die Einsatzmenge der Schutzkolloide beträgt im allgemeinen 0.05 bis 1 Gew.-% bezogen auf die Wasserphase, vorzugsweise 0.1 bis 0.5 Gew.-%.

Die Aushärtung kann in Anwesenheit eines Puffersystem durchgeführt werden. Bevorzugt werden Puffersysteme, die den pH-Wert der Wasserphase bei Beginn der Polymerisation auf einen Wert zwischen 14 und 6, vorzugsweise zwischen 13 und 9 einstellen. Unter diesen Bedingungen liegen Schutzkolloide mit Carbonsäuregruppen ganz oder teilweise als Salze vor. Auf diese Weise wird die Wirkung der Schutzkolloide günstig beeinflusst. Besonders gut geeignete Puffersysteme enthalten Phosphat- oder Boratsalze.

Der wässrigen Phase kann Salz, z.B. Natriumchlorid oder Calziumchlorid zugesetzt.werden, um die Löslichkeit der Komponente (a) in Wasser zu erniedrigen. Diese Maßnahme wird besonders dann empfohlen, wenn die Komponente (a) Acrylnitril als Vinylmonomer enthält. Die Menge der Wasserphase beträgt bei der Aushärtung 60 bis 1000 % vorzugsweise 100 bis 200 % bezogen auf das Gemisch aus den Komponenten (a) bis (e).

Die Temperatur bei der Aushärtung richtet sich nach der Zerfallstemperatur des eingesetzten Radikalstarters. Sie liegt im allgemeinen zwischen 50 bis 150°C, vorzugsweise zwischen 60 und 130°C. Die Polymerisation dauert 1 bis einige Stunden, beispielsweise 10 h. Es hat sich bewährt, ein Temperaturprogramm anzuwenden, bei dem die Polymerisation bei niedriger Temperatur, z. B. 60°C begonnen wird und mit fortschreitendem Polymerisationsumsatz die Reaktionstemperatur gesteigert wird. Auf diese Weise lässt sich z.B. die Forderung nach sicherem Reaktionsverlauf und hohem Polymerisationsumsatz sehr gut erfüllen.

Nach der Aushärtung kann das gebildete Perlpolymerisat mit üblichen Methoden z.B. durch Filtrieren oder Dekantieren isoliert und gegebenenfalls nach ein oder mehreren Wäschen getrocknet und falls gewünscht gesiebt werden.

Die Funktionalisierung des gebildeten Perlpolymerisates zum Ionenaustauscher erfolgt nach an sich bekannten Verfahren.

Zur Herstellung eines schwachsauren Eisenoxid- und/oder Eisenoxihydroxyd-haltigen Ionenaustauschers werden als Vinylmonomer (a) Acrylsäuremethylester und/oder Acrylnitril verwendet und das erhaltene Perlpolymerisat durch alkalische Verseifung der Ester- bzw. Nitrilgruppen in schachsaure Gruppen funktionalisiert. Als alkalisches Verseifungsagens werden wässrige, alkoholische oder wässrig-alkoholische Lösungen von Alkali- und Erdalkalihydroxiden eingesetzt. Bevorzugt werden wässrige Alkalilösungen wie Kalilauge und insbesondere Natronlauge. Die Konzentration der verwendeten Alkalilösung beträgt 5 bis 60 Gew.-% vorzugsweise 10 bis 50 Gew.-%.

Die Menge an Alkalilösung wird so gewählt, dass ein Alkaliüberschuss von 10 bis 300 Mol-%, vorzugsweise 50 bis 200 Mol-% bezogen auf die Menge der zu verseifenden Nitrilgruppen oder Estergruppen eingestellt wird.

Bevorzugt wird die alkalische Verseifung bei Temperaturen von 110 bis 150°C unter Druck durchgeführt. Alternativ ist auch eine drucklose Verseifung mit wässriger Natronlauge möglich. Zur Durchführung der Druckverseifung wird auf EP-A-0 406 648 verwiesen. Bevorzugt wird das Perlpolymerisat vorgelegt und die wässrige Natronlauge zudosiert. Nach beendeter Verseifung wird der erhaltene Ionenaustauscher bei beispielsweise 90°C neutral gewaschen. Zur weiteren Reinigung kann der Ionenaustauscher bei erhöhter Temperatur mit Wasser bzw. Dampf behandelt werden. Feinteilige Bestandteile können anschließend in einer Klassiersäule entfernt werden.

Die Umsetzung des Perlpolymerisates zu einem Eisenoxid- und/oder Eisenoxihydroxyd-haltigen Anionenaustauscher kann durch Chlormethylierung und anschließende Aminierung erfolgen.

Zur Chlormethylierung wird vorzugsweise Chlormethylmethylether eingesetzt. Der Chlormethylmethylether kann in ungereinigter Form eingesetzt werden, wobei er als Nebenkomponenten beispielsweise Methylal und Methanol enthalten kann. Der Chlormethylmethylether wird vorzugsweise im Überschuss eingesetzt und wirkt nicht nur als Reaktant sondern auch als Lösungs- und Quellmittel. Die Anwendung eines zusätzlichen Lösungsmittels ist daher im allgemeinen nicht erforderlich. Die Chlormethylierungsreaktion wird durch Zugabe einer Lewissäure katalysiert. Geeignete Katalysatoren sind z.B. Eisen(III)chlorid, Zinkchlorid, Zinn(IV)chlorid und Aluminiumchlorid. Die Reaktionstemperatur kann im Bereich von 40 bis 80°C liegen. Bei druckloser Fahrweise ist ein Temperaturbereich von 50 bis 60°C besonders günstig. Während der Reaktion können die flüchtigen Bestandteile, wie Salzsäure, Methanol, Methylal durch Abdampfen entfernt werden. Zur Entfernung des Rest-Chlormethylmethylether sowie zur Reinigung des Chlormethylats kann mit Methylal, Methanol und schließlich mit Wasser gewaschen werden.

Zur Herstellung von schwachbasischen Anionenaustauschern wird das chlormethylierte Copolymerisat mit Ammoniak, einem primären Amin wie Methyl- oder Ethylamin oder vorzugsweise mit einem sekundären Amin wie Dimethylamin umgesetzt.

Die Umsetzung mit tertiären Aminen führt zu starkbasischen Anionenaustauschern. Geeignete tertiären Amine sind Trimethylamin, Dimethylaminoethanol, Triethylamin, Tripropylamin und Tributylamin.

Zur vollständigen Umsetzung des chlormethylierten Copolymerisates sind mindestens 1 mol Amin, bezogen auf 1 mol Chlor im Chlormethylat erforderlich. Bevorzugt wird ein leichter Aminüberschuss. Besonders bevorzugt sind 1,1 bis 1,3 mol Amin pro mol Chlor.

Die Aminierungsreaktion erfolgt in Anwesenheit von Wasser oder Wasser Methanol-Gemischen. Während der Aminierung nimmt das Harz kontinuierlich Wasser auf und quillt hierbei auf. Daher ist eine Mindestmenge an Wasser notwendig, um den Ansatz rührfähig zu halten. Pro Gramm chlormethyliertem Perlpolymerisat sollen mindestens 1,5 Gramm, bevorzugt 2 bis 4 Gramm Wasser eingesetzt werden.

Die Temperatur, bei der die Aminierung durchgeführt wird, kann im Bereich zwischen Raumtemperatur und 160°C liegen. Bevorzugt werden bei Temperaturen zwischen 70 und 120°C, besonders bevorzugt im Bereich zwischen 70 und 110°C, verwandt.

Nach der Aminierung wird der erhaltene Anionenaustauscher mit Wasser gewaschen und anschließend in entionisiertem Wasser bei Temperaturen von 20 bis 120°C, vorzugsweise von 50 bis 90°C behandelt. Das Produkt wird beispielsweise durch Absetzen lassen oder Filtrieren isoliert.

Selbstverständlich können die erfindungsgemäßen Anionenaustauscher auf bekanntem Wege durch Austausch des Chloridions gegen ein anderes Gegenion in andere Formen beispielsweise in die OH-Form überführt werden.

Die nach dem erfindungsgemäßen Verfahren erhaltenen Eisenoxid- und/oder Eisenoxihydroxyd-haltigen Ionenaustauscher zeichnen sich durch eine besonders hohe Adsorption von Arsen aus.

Die erfindungsgemäßen Eisenoxid- und/oder Eisenoxihydroxid-haltigen Ionenaustauscher und Perlpolymerisate gemäß der Stufe II können zur Reinigung von Trinkwasser von Abwasserströmen der chemischen Industrie sowie von Müllverbrennungsanlagen verwendet werden. Eine weitere Anwendung der erfindungsgemäßen Ionenaustauscher stellt die Reinigung von Sickerwässern aus Deponien dar.

Die erfindungsgemäßen Eisenoxid- und/oder Eisenoxidhydroxyd-haltigen Ionenaustauscher und Perlpolymerisate gemäß der Stufe II werden bevorzugt in Vorrichtungen eingesetzt.

Die Erfindung betrifft deshalb auch von einer zu behandelnden Flüssigkeit durchströmbare Vorrichtungen, bevorzugt Filtrationseinheiten, besonders bevorzugt Adsorptionsbehälter, insbesondere Filteradsorptionsbehälter, die gefüllt mit den Eisenoxid- und/oder Eisenhydroxid-haltigen Ionenaustauschern oder Perlpolymerisaten gemäß der Stufe II erhältlich nach den in dieser Anmeldung beschriebenen Verfahren zur Entfernung von Schwermetallen, insbesondere Arsen, aus wässrigen Medien, bevorzugt Trinkwasser verwendet werden. Die Vorrichtungen können z.B. im Haushalt an die Sanitär- und Trinkwasserversorgung angeschlossen werden.

### Beispiele

### Beispiel 1

### Herstellung eines schwach sauren Eisenoxihydroxyd-haltigen Ionenaustauschers

### a) Herstellung eines Eisenoxihydroxyd-haltigen Perlpolymerisats

In einen 4 Liter-Planschliffreaktor mit Gitterrührer, Kühler, Temperaturfühler sowie Thermostat und Schreiber wird eine wässrige Lösung aus 2,621 g Methylhydroxyethylcellulose, 87,4 g Natriumchlorid, 0,920 g eines methylenverknüpften Kondensationsproduktes von Arylsulfonsäuren (Retingan® ZN) und 636,8 g entionisiertes Wasser vorgelegt.

In einem separaten Rührgefäß werden 39,2 g Polymethylacrylat in 290,1 g Acrylnitril und 23,52 g Diethylenglycoldivinylether gelöst. Zu dieser Lösung werden 39,2 g Eisenoxidhydroxid (α-FeOOH) in Form agglomerierter Teilchen mit einer Teilchengröße von 5 µm gegeben und 4 min. bei 24.000 U/min. mit einem Rotor-Stator-Mischer dispergiert. Danach werden 1,05 g Dibenzoylperoxid 75 W zugegeben und binnen 15 min. in der erhaltenen Dispersion gelöst.

Die aktivierte eisenoxidhydroxidhaltige Dispersion wird durch einen verlängerten Trichter unter Rühren mit 200 U/min. in den vorbereiteten 4 Liter-Planschliffreaktor unter die Oberfläche der wässrige Phase eingetragen. Nun wird auf 70°C aufgeheizt, wobei in den ersten 15 min. ein Stickstoffstrom von 20 L/min. übergeleitet wird. Es wird 7 h bei 70°C erwärmt, dann auf 90°C geheizt und noch 5 h bei 90°C gehalten. Nach dem Abkühlen wird das Polymerisat über einem 100 µm - Sieb mit viel Wasser gewaschen, dann bei 80°C getrocknet. Man erhält 337,9 g braun gefärbter Perlen mit der durchschnittlichen Korngröße von 480 µm.

### b) Herstellung eines Eisenoxid- und/oder Eisenoxihydroxyd-haltigen schwach sauren Ionenaustauschers

In einen 4 Liter-Planschliffreaktor mit Gitterrührer, Destillationsbrücke, Temperaturfühler sowie Thermostat und Schreiber werden 1240 g entionisiertes Wasser vorgelegt und unter Rühren mit 200 UpM 200 g des Perlpolymerisates aus (a) suspendiert. Bei einer Temperatur von 100°C werden 274,4 g 50 gew.-%ige Natronlauge innerhalb von 2 Stunden zudosiert. Anschließend werden weitere 1371,9 g 50 gew.-%ige Natronlauge innerhalb von 75 Min zugesetzt. Danach werden bei einer Manteltemperatur von 125°C 1 Liter Wasser abdestilliert und der Ansatz abgekühlt. Das Produkt wird dann in eine Säule überführt und mit entionisiertem Wasser neutral gewaschen. Man erhält 780 ml braungefärbten schwachsauren Ionenaustauscher mit einer mittleren Teilchengröße von 740µm.

### Beispiel 2

### a) Herstellung eines Eisenoxid- und/oder Eisenoxihydroxyd-haltigen Perlpolymerisats

In einer Kugelmühle mit Keramikkugeln werden 40 g Eisenoxidhydroxid (α-FeOOH) in einer Mischung von 40 g Ölsäure und 100 g Xylol dispergiert. 85,98 g dieser Dispersion werden mit 260,8 g Acrylnitril und 17,20 g Diethylenglycoldivinylether verrührt. Nach homogener Vermischung werden darin 0,97 g Dibenzoylperoxid 75 W binnen 15 min. gelöst.

Dieses Gemisch wird in einem 4 Liter - Planschliffreaktor, der mit Gitterrührer, Kühler, Temperaturfühler und Kühl/Heizmantel ausgerüstet war und eine Lösung aus 2,621 g Methylhydroxyethylcellulose, 87,4 g Natriumchlorid, 0,920 g eines methylenverknüpften Kondensationsproduktes von Arylsulfonsäuren (Retingan® ZN) und 636,8 g entionisiertes Wasser enthält bei einer Rührgeschwindigkeit von 200 Upm eingetragen. Danach wird auf 70°C aufgeheizt, wobei in den ersten 15 min. ein Stickstoffstrom von 20 L/min. übergeleitet wird. Es wird 7 h bei 70°C erwärmt, dann auf 90°C geheizt und noch 5 h bei 90°C gehalten. Nach dem Abkühlen wird das Polymerisat über einem 100 µm - Sieb mit viel Wasser gewaschen, dann bei 80°C getrocknet. Man erhält 265,3 g braun gefärbter Perlen mit der durchschnittlichen Korngröße von 390 µm.

### b) Herstellung eines Eisenoxid- und/oder Eisenoxihydroxyd-haltigen schwachsauren Ionenaustauschers

Entsprechend der in Beispiel 1b) angegebenen Arbeitsweise werden 200 g Perlpolymerisat aus 2a) verseift. Man erhält 810 ml braungefärbten schwachsauren Ionenaustauscher mit einer mittleren Teilchengröße von 600 µm.

## Patentansprüche

1. Verfahren zur Herstellung eines Eisenoxid- und/oder Eisenoxihydroxyd-haltigen Ionenaustauschers, **dadurch gekennzeichnet, dass** man
I) ein Gemisch aus
a) Vinylmonomer
b) Vernetzer
c) feinteiligem Eisenoxid und/oder Eisenoxidhydroxid
d) Dispergierhilfsmittel und
e) Radikalstarter erzeugt,
II) das erhaltene Gemisch in wässriger Phase bei erhöhter Temperatur zu einem Perlpolymerisat aushärtet und
III) das erhaltene Perlpolymerisat durch Funktionalisieren in einen Ionenaustauscher überführt.

2. Verfahren gemäß Anspruch 1, **dadurch gekennzeichnet, dass** zur Herstellung schwachsaurer Eisenoxid- und/oder Eisenoxihydroxid-haltiger Ionenaustauscher als Vinylmonomer Acrylsäuremethylester und/oder Acrylnitril verwendet werden und das erhaltene Perlpolymerisat durch alkalische Verseifung der Ester bzw. Nitrilgruppen in schwachsaure Gruppen funktionalisiert wird.

3. Verfahren gemäß Anspruch 1, **dadurch gekennzeichnet, dass** zur Herstellung eines Eisenoxid- und/oder Eisenoxihydroxid-haltigen Anionenaustauschers das Perlpolymerisat in der Stufe III) zunächst chlormethyliert und dann aminiert wird.

4. Verfahren zur Herstellung schwachbasischer Eisenoxid- und/oder Eisenoxihydroxid-haltiger Anionenaustauscher, **dadurch gekennzeichnet, dass** das Perlpolymerisat aus Stufe II zunächst chlormethyliert und dann das chlormethylierte Copolymerisat in der Stufe III mit Ammoniak, einem primären Amin oder einem sekundären Amin umgesetzt wird.

5. Verfahren zur Herstellung starkbasischer Eisenoxid- und/oder Eisenoxihydroxid-haltiger Anionenaustauscher, **dadurch gekennzeichnet, dass** das Perlpolymerisat aus Stufe II zunächst chlormethyliert wird und dann das chlormethylierte Copolymerisat in der Stufe III mit tertiären Aminen umgesetzt wird.

6. Eisenoxid- und/oder Eisenoxihydroxid-haltige Ionenaustauscher erhältlich durch
I) Erzeugen eines Gemisches aus Vinylmonomer, Vernetzer, feinteiligem Eisenoxid und/oder Eisenoxihydroxid und Dispergiermittel,
II) Aushärten des erhaltenen Gemisches in wässriger Phase bei erhöhter Temperatur zu einem Perlpolymerisat und
III) Überführen des erhaltenen Perlpolymerisats in einen Ionenaustauscher durch Funktionalisieren.

7. Eisenoxid- und/oder Eisenoxihydroxid-haltige Ionenaustauscher gemäß Anspruch 6, **dadurch gekennzeichnet, dass** in Stufe I) zusätzlich ein Radikalstarter eingesetzt wird.

8. Verwendung der Eisenoxid- und/oder Eisenoxihydroxid-haltigen Ionenaustauscher gemäß der Ansprüche 6 und 7 sowie der Perlpolymerisate aus Stufe II zur Adsorption von Arsen und zur Reinigung von Trinkwasser, Abwässerströmen der chemischen Industrie und von Müllverbrennungsanlagen, zur Reinigung von Sickerwässem aus Deponien sowie zur Entfernung von Schadstoffen aus Flüssigkeiten oder Gasen.
